# EUROPEAN PATENT APPLICATION

(11) **EP 4 590 036 A1**
(43) Date of publication of application: **23.07.2025**
(21) Application number: 22958367.9
(22) Date of filing: 13.09.2022
(51) Int. Cl.: H04W 56/00

(54) **METHOD AND APPARATUS FOR RECEIVING SYNCHRONIZATION SIGNAL BLOCK, METHOD AND APPARATUS FOR TRANSMITTING SYNCHRONIZATION SIGNAL BLOCK, MEDIUM, AND PRODUCT**

(71) Applicant: Beijing Xiaomi Mobile Software Co., Ltd., Beijing 100085 (CN)
(72) Inventor: GUO, Shengxiang, Beijing 100085 (CN)
(74) Representative: Dehns Germany Partnerschaft mbB
(86) International application number: PCT/CN2022/118560
(87) International publication number: WO 2024/055173

(57) **Abstract**

The present invention relates to the field of communications. Disclosed are a method and apparatus for receiving a synchronization signal block, a method and apparatus for transmitting a synchronization signal block, a medium, and a product. The method for receiving a synchronization signal block comprises: receiving synchronization signal blocks in at least two grids. According to the method, complete synchronization information can be acquired by means of at least two synchronization signal blocks on at least two grids.

## Description

### TECHNICAL FIELD

The present disclosure relates to the field of communication technology, in particular, to a method for receiving a synchronization signal block, a method for sending a synchronization signal block, an electronic device, a medium, and a product.

### BACKGROUND

In the Work Item Description (WID) in 5G Release 18 (Rel-18), the project where New Radio (NR) with a bandwidth less than 5MHz is supported is approved.

During the initial access of the User Equipment (UE), the UE retrieves the synchronization signal block (SSB) over the system bandwidth, and the frequency domain resources occupied by the initial access SSB are 20 Resource Blocks (RB).

### SUMMARY

Embodiments of the present disclosure provide a method for receiving a synchronization signal block, a method for sending a synchronization signal block, an electronic device, a medium, and a product. The technical solutions are as follows.

According to one aspect of embodiments of the present disclosure, a method for receiving a synchronization signal block is provided. The method is performed by a user equipment and includes: receiving a synchronization signal block in at least two grids.

According to another aspect of embodiments of the present disclosure, a method for sending a synchronization signal block is provided. The method is performed by a network device and includes: sending a synchronization signal block in at least two grids.

According to another aspect of embodiments of the present disclosure, an apparatus for receiving a synchronization signal block is provided. The apparatus includes: a receiving module configured to receive a synchronization signal block in at least two grids.

According to another aspect of embodiments of the present disclosure, an apparatus for sending a synchronization signal block is provided. The apparatus includes: a sending module configured to send a synchronization signal block in at least two grids.

According to another aspect of embodiments of the present disclosure, a user equipment is provided. The user equipment includes a processor and a transceiver connected to the processor.

The processor is configured to load and execute executable instructions to perform the method for receiving the synchronization signal block as described in the above various aspects.

According to another aspect of embodiments of the present disclosure, a network device is provided. The network device includes a processor and a transceiver connected to the processor.

The processor is configured to load and execute executable instructions to perform the method for sending the synchronization signal block as described in the above various aspects.

According to another aspect of embodiments of the present disclosure, a computer-readable storage medium is provided, which stores at least one instruction, at least one program, a code set, or an instruction set. The at least one instruction, the at least one program, the code set, or the instruction set is loaded and executed by a processor to implement the method for receiving the synchronization signal block as described in the above aspects, or the method for sending the synchronization signal block as described in the above aspects.

According to another aspect of embodiments of the present disclosure, a computer program product (or a computer program) is provided. The computer program product includes computer instructions stored. The processor of the computer device reads the computer instructions from the computer-readable storage medium, and executes the computer instructions to cause the computer device to perform the method for receiving the synchronization signal block as described in the above aspects, or the method for sending the synchronization signal block as described in the above aspects.

According to another aspect of embodiments of the present disclosure, a communication system is provided, including a user equipment and a network device. The user equipment is configured to perform the method for receiving the synchronization signal block as described in the above aspects, and the network device is configured to perform the method for sending the synchronization signal block as described in the above aspects.

The technical solutions provided in embodiments of the present disclosure can include the following beneficial effects.

In the above method for receiving the synchronization signal block, the user equipment receives the synchronization signal block in at least two grids, which ensures that the user equipment can obtain the complete synchronization signal block by receiving synchronization signal blocks in multiple grids.

It should be understood that the general description in the above and the detailed description in the following are only exemplary and explanatory, and cannot limit the present disclosure.

### BRIEF DESCRIPTION OF THE DRAWINGS

In order to provide a clearer explanation of technical solutions in embodiments of the present disclosure, a brief introduction to the drawings required in the description of embodiments of the present disclosure will be provided in the following. It is apparent that the drawings are only some of the embodiments of the present disclosure, and for those skilled in the art, other drawings can be obtained based on these drawings without creative efforts.
FIG. 1 is a block diagram of a communication system according to one or more embodiments of the present disclosure;
FIG. 2 is a flowchart of a method for receiving a synchronization signal block according to one or more embodiments of the present disclosure;
FIG. 3 is a schematic diagram of a grid group according to one or more embodiments of the present disclosure;
FIG. 4 is a schematic diagram of a grid group according to one or more embodiments of the present disclosure;
FIG. 5 is a flowchart of a method for sending a synchronization signal block according to one or more embodiments of the present disclosure;
FIG. 6 is a schematic diagram of a synchronization signal block group according to one or more embodiments of the present disclosure;
FIG. 7 is a block diagram of an apparatus for receiving a synchronization signal block according to one or more embodiments of the present disclosure;
FIG. 8 is a block diagram of an apparatus for sending a synchronization signal block according to one or more embodiments of the present disclosure;
FIG. 9 is a schematic diagram of a structure of a terminal according to one or more embodiments of the present disclosure; and
FIG. 10 is a schematic diagram of a structure of an access network device according to one or more embodiments of the present disclosure.

### DETAILED DESCRIPTION

A detailed explanation of embodiments will be provided herein, which are illustrated in the drawings. The following description when referring to the drawings, unless otherwise indicated, the same reference numerals in different drawings represent the same or similar elements. The embodiments described in the following do not represent all embodiments consistent with the present disclosure. On the contrary, the embodiments are only examples of devices and methods consistent with some aspects of the present disclosure as detailed in the appended claims.

In the WID in 5G Rel-18, the project where NR with a bandwidth less than 5MHz is supported is approved. The preferred bandwidth below 5MHz is 3MHz or 3.6MHz. Calculation is performed at a Sub-Carrier Space (SCS) of 15 kilohertz (kHz), the available number of RBs for the entire system bandwidth of the communication system does not exceed 20 RBs, while the frequency domain resources occupied by the initial access SSB are 20 RBs. Therefore, the system frequency domain resources will be insufficient, and the SSB will exceed the system bandwidth, without optimizing the time-frequency domain mapping of SSB. As a result, the performance of the initial access will be severely affected. Due to the fact that the punching of the Physical Broadcast Channel (PBCH) in the Rel-18 WID is not restricted, the PBCH will be particularly severely affected.

The present disclosure provides a method for sending and receiving a synchronization signal block, which can improve the decoding performance by sending and receiving multiple synchronization signal blocks carrying the same information, and combining the multiple synchronization signal blocks at a receiving terminal. Missing parts of the multiple consecutively received synchronization signal blocks are always fixed, which will reduce the scale required for the combination decoding. The information of the consecutively received synchronization signal blocks can be made complete through a reasonable grid design, so that the initial access performance can be more reliable.

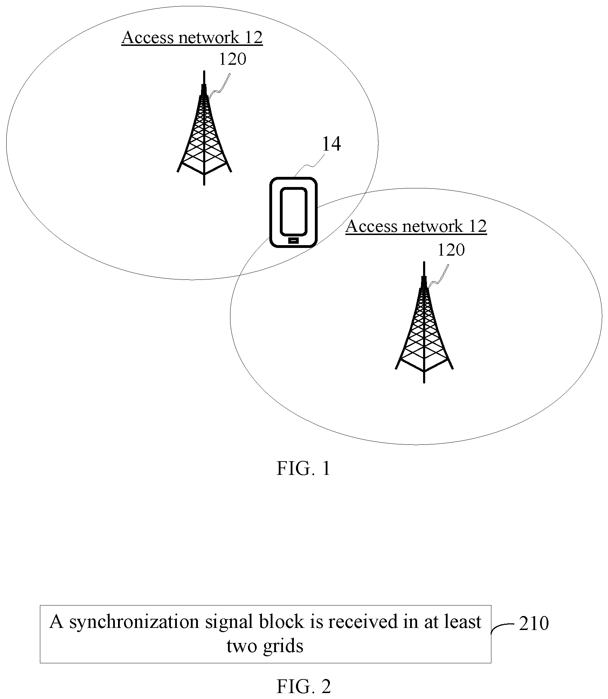

FIG. 1 shows a block diagram of a communication system according to one or more embodiments of the present disclosure. The communication system can include an access network 12 and a user terminal 14.

The access network 12 includes several network devices 120. The network device (also referred to as the access network device) 120 can be a base station. The base station is a device deployed in the access network to provide wireless communication functionalities for the user terminal (also referred to as terminal) 14. The base station can include various forms of macro base stations, micro base stations, relay stations, or access point, and so on. In systems using different wireless access technologies, the names of the devices with a base station functionality may vary. For example, in the Long Term Evolution (LTE) system, the base station is called eNodeB or eNB, and in the 5G NR (New Radio) system, the base station is called gNodeB or gNB. With the evolution in the communication technology, the description of "base station" may change. For the convenience of description in embodiments of the present disclosure, the devices that provide the wireless communication functionality for the user terminal 14 are collectively referred to as network devices.

The user terminal 14 can include various devices with the wireless communication capability, such as handheld devices, vehicle mounted devices, wearable devices, computing devices or other processing devices connected to the wireless modem, as well as user devices, mobile stations (MS), terminal devices, of various forms, and so on. For the convenience of description, the above devices are collectively referred to as user terminals. The network device 120 and the user terminal 14 communicate with each other through some air interface technology, for example, the Uu interface.

There are two communication scenarios between the network device 120 and the user terminal 14, for example, the uplink communication scenario and the downlink communication scenario. In some embodiments, the uplink communication refers to sending signals to the network device 120, and the downward communication refers to sending signals to the user terminal 14.

Embodiments of the present disclosure can be applied to various communication systems, such as Global System of Mobile (GSM) Communication systems, Code Division Multiple Access (CDMA) systems, Wideband Code Division Multiple Access (WCDMA) systems, General Packet Radio Service (GPRS) systems, Long Term Evolution (LTE) systems, LTE Frequency Division Duplex (FDD) systems, LTE Time Division Duplex (TDD) systems, Advanced Long Term Evolution (LTE-A) systems, New Radio (NR) systems, evolution systems for NR systems, LTE-based access to Unlicensed spectrum (LTE-U) systems, NR-U systems, Universal Mobile Telecommunication systems (UMTS), Worldwide Interoperability for Microwave Access (WiMAX) communication systems, Wireless Local Area Networks (WLAN), Wireless Fidelity (WiFi), next generation communication systems, or other communication systems.

The traditional communication systems often support a limited number of links, which are easy to achieve. However, with the development of the communication technology, mobile communication systems will not only support traditional communication, but also support, for example, Device to Device (D2D) communication, Machine to Machine (M2M) communication, Machine Type Communication (MTC), Vehicle to Vehicle (V2V) communication, and Vehicle to Everything (V2X) systems. Embodiments of the present disclosure can also be applied to these communication systems.

FIG. 2 shows a flowchart of a method for receiving a synchronization signal block according to one or more embodiments of the present disclosure. The method can be performed by the user equipment in the communication system shown in FIG. 1, and the method includes following steps.

In step 210, a synchronization signal block is received in at least two grids.

The at least two grids mentioned above belong to the same grid group. The grid group includes at least one grid pair, and the grid pair includes a first grid and a second grid.

In some embodiments, each grid group includes at least two grid subgroups. The at least two grids mentioned above belong to the same grid subgroup. Each grid subgroup includes at least one grid pair, and each grid pair includes a first grid and a second grid.

In some embodiments, the first grid is separated from the second grid by a first frequency domain element width.

In some embodiments, the first frequency domain element width is defined in a protocol or pre-configured by the network device for the user equipment.

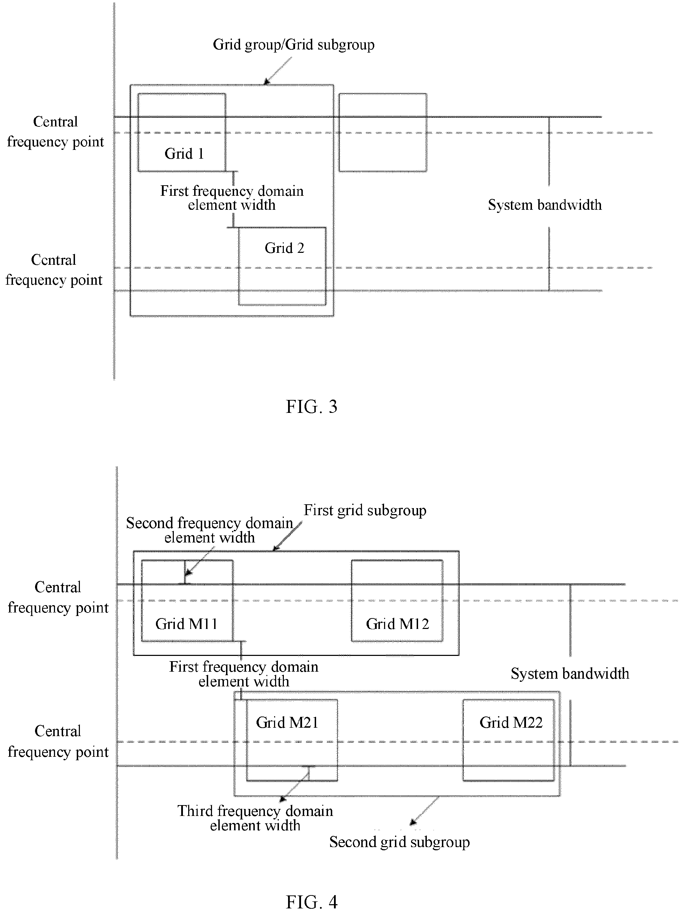

In some embodiments, the grid group or the grid subgroup includes at least two grid pairs. Between different grid pairs, the grids in one grid pair can be both different from the grids in the other grid pair, alternatively, there can be a same grid between different grid pairs. For example, the grid group/the grid subgroup includes Grid 1 to Grid 3, where Grid 1 and Grid 2 form a grid pair, and Grid 2 and Grid 3 also form a grid pair. For example, the grid group/the grid subgroup includes Grid 4 to Grid 7, where Grid 4 and Grid 5 form a grid pair, and Grid 6 and Grid 7 form a grid pair. As shown in FIG. 3, Grid 1 and Grid 2 form a grid pair, and an edge of Grid 1 in a low-frequency direction is separated from an edge of Grid 2 in a high-frequency direction by a first frequency domain element width.

In some embodiments, a distance between grids can be a distance between central frequency points of the grids, or a distance between edges of the grids. The distance between the edges of two grids includes the distance between the edges of grids in frequency domain directions that each grid is close to the other.

In some embodiments, the first grid is separated from a first edge of a system bandwidth of the communication system by a second frequency domain element width, and the second grid is separated from a second edge of the system bandwidth by a third frequency domain element width.

In some embodiments, the first edge is the edge of the system bandwidth in the first frequency domain direction, and the second edge is the edge of the system bandwidth in the second frequency domain direction. The first frequency domain direction is opposite to the second frequency domain direction. For example, the first frequency domain direction is the high-frequency direction, and the second frequency domain direction is the low-frequency direction. Alternatively, the first frequency domain direction is the low-frequency direction, and the second frequency domain direction is the high-frequency direction.

In some embodiments, the grid group includes at least two grid pairs. Between different grid pairs, the grids in one grid pair can be both different from the grids in the other grid pair, alternatively, there can be a same grid between different grid pairs.

In some embodiments, each grid group includes a first grid subgroup and a second grid subgroup, where the first grid subgroup includes M first grids and the second grid subgroup includes M second grids. The M first grids and the M second grids are in one-to-one correspondence, that is, the M first grids and the M second grids form M grid pairs. The first grid is separated from the first edge of the system bandwidth in the high-frequency direction by a second frequency domain element width, and the second grid is separated from the second edge of the system bandwidth in the low-frequency direction by a third frequency domain element width. For example, as shown in FIG. 4, the first grid subgroup includes Grid M11 and Grid M12, and the second grid subgroup includes Grid M21 and M22. Grid M11 and Grid M21 form a grid pair, and Grid M12 and Grid M22 form a grid pair. The grids in the first grid subgroup are separated from the system bandwidth by a second frequency domain element width, and the grids in the second grid subgroup are separated from the system bandwidth by a third frequency domain element width.

In some embodiments, the second frequency domain element width and the third frequency domain element width are defined in a protocol or pre-configured by the network device for the user equipment. The second frequency domain element width can be the same as or different from the third frequency domain element width.

In some embodiments, the first grid can also be separated from the second grid by the first frequency domain element width. The first frequency domain element width can be the same as or different from the second frequency domain element width and the third frequency domain element width.

In some embodiments, the first grid is the grid close to the high-frequency edge of the system bandwidth, and the second grid is the grid close to the low-frequency edge of the system bandwidth. Alternatively, the first grid is the grid close to the low-frequency edge of the system bandwidth, and the second grid is the grid close to the high-frequency edge of the system bandwidth.

In some embodiments, a distance between the grid and the system bandwidth can be a distance between the central frequency point of the grid and the edge of the system bandwidth, or a distance between the edge of the grid and the edge of the system bandwidth.

In some embodiments, a sum of frequency domain element widths occupied by the two SSBs and the first frequency domain element width is greater than or equal to the system bandwidth.

In some embodiments, a sum of frequency domain element widths occupied by the two grids and the first frequency domain element width is greater than or equal to the system bandwidth.

In some embodiments, the first grid is the grid located close to the high-frequency edge of the system bandwidth, and a frequency domain position of the high-frequency edge of the first grid is higher than a frequency domain position of the high-frequency edge of the system bandwidth. The second grid is the grid located close to the low-frequency edge of the system bandwidth, and a frequency domain position of the low-frequency edge of the second grid is lower than a frequency domain position of the low-frequency edge of the system bandwidth. In some embodiments, the second grid is the grid located close the high-frequency edge of the system bandwidth, and a frequency domain position of the high-frequency edge of the second grid is higher than a frequency domain position of the high-frequency edge of the system bandwidth. The first grid is the grid located close to the low-frequency edge of the system bandwidth, and a frequency domain position of the low-frequency edge of the first grid is lower than a frequency domain position of the low-frequency edge of the system bandwidth.

The at least two grids receiving the synchronization signal block belong to the same grid group, the grid group may not be divided into subgroups, and the grid pair(s) can be directly provided within the grid group. The user equipment receives the synchronization signal block in the at least two grids within the same grid group. Alternatively, the grid group may be divided into subgroups, and the grid pair(s) can be provided within the grid subgroup. The user equipment receives the synchronization signal block in the at least two grids within the same grid subgroup.

After obtaining the synchronization signal blocks sent in each grid in the at least one grid pair, the synchronization signal blocks belonging to the same grid pair are combined to obtain the combined synchronization signal block, and the combined synchronization signal block is used to parse the complete synchronization information.

In some embodiments, the at least two grids include the first grid and the second grid. The user equipment receives a first synchronization signal block in the first grid, and a second synchronization signal block in the second grid. The synchronization information is obtained based on the first synchronization signal block and the second synchronization signal block. The first synchronization signal block and the second synchronization signal block carry the same information. For example, the user equipment can combine the first synchronization signal block and the second synchronization signal block, obtain the combined synchronization signal block, parse the combined synchronization signal block, and obtain the complete synchronization information. The first synchronization signal block and the second synchronization signal block carry the same synchronization information.

In the case where the first grid is separated from the second grid in the grid pair by the first frequency domain element width, after determining the first frequency domain position of the first synchronization signal block, the user equipment determines the second frequency domain position that is offset from the first frequency domain position by the first frequency domain element width in the first frequency domain direction, and detects the second synchronization signal block from the second frequency domain position along a direction from a low-frequency to a high-frequency or from a high-frequency to a low-frequency.

In some embodiments, a synchronization signal group corresponding to the grid group is also defined. The same grid group is used to transmit at least two synchronization signal blocks, each grid in the grid group is used to transmit one synchronization signal block, and the at least two synchronization signal blocks transmitted in the same grid group belong to the same synchronization signal block group. The synchronization signal block group includes at least two synchronization signal blocks, and the at least two synchronization signal blocks carry the same synchronization information.

In some embodiments, the grid mentioned above can be a synchronization grid or a channel grid.

In some embodiments, the system bandwidth includes at least one of the system bandwidth of the LTE system or the system bandwidth of the NR system.

In some embodiments, the system bandwidth is less than 5MHz. In some embodiments, the system bandwidth is 3MHz or 3.6MHz.

In some embodiments, the system bandwidth is less than 20MHz. In some embodiments, the system bandwidth is 5MHz, 8MHz, or 10MHz.

According to the method for receiving the synchronization signal block provided by embodiments of the present disclosure, the user equipment receives at least two synchronization signal blocks carrying the same synchronization information in at least two grids, so that the user equipment can obtain the complete synchronization information through at least two synchronization signals, which can avoid incomplete information due to insufficient bandwidth and avoid information loss during the transmission.

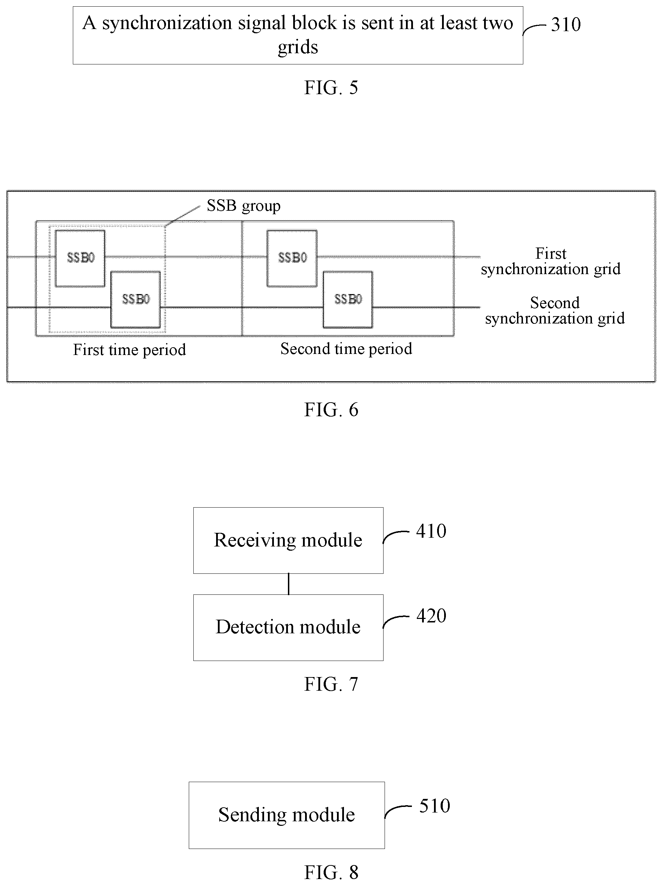

FIG. 5 shows a flowchart of a method for sending a synchronization signal block according to one or more embodiments of the present disclosure. The method can be performed by the network device in the communication system shown in FIG. 1, and the method includes following steps.

In step 310, a synchronization signal block is sent in at least two grids.

The at least two grids mentioned above belong to the same grid group. The grid group includes at least one grid pair, and the grid pair includes a first grid and a second grid.

In some embodiments, each grid group includes at least two grid subgroups. The at least two grids mentioned above belong to the same grid subgroup. Each grid subgroup includes at least one grid pair, and each grid pair includes a first grid and a second grid.

In some embodiments, the first grid is separated from the second grid by a first frequency domain element width.

In some embodiments, the first frequency domain element width is defined in a protocol or pre-configured by the network device for the user equipment.

In some embodiments, the grid group or the grid subgroup includes at least two grid pairs. Between different grid pairs, the grids in one grid pair can be both different from the grids in the other grid pair, alternatively, there can be a same grid between different grid pairs. For example, the grid group/the grid subgroup includes Grid 1 to Grid 3, where Grid 1 and Grid 2 form a grid pair, and Grid 2 and Grid 3 also form a grid pair. For example, the grid group/the grid subgroup includes Grid 4 to Grid 7, where Grid 4 and Grid 5 form a grid pair, and Grid 6 and Grid 7 form a grid pair. As shown in FIG. 3, Grid 1 and Grid 2 form a grid pair, and an edge of Grid 1 in a low-frequency direction is separated from an edge of Grid 2 in a high-frequency direction by a first frequency domain element width.

In some embodiments, a distance between grids can be a distance between central frequency points of the grids, or a distance between edges of the grids. The distance between the edges of two grids includes the distance between the edges of grids in frequency domain directions that each grid is close to the other.

In some embodiments, the first grid is separated from a first edge of a system bandwidth of the communication system by a second frequency domain element width, and the second grid is separated from a second edge of the system bandwidth by a third frequency domain element width.

In some embodiments, the first edge is the edge of the system bandwidth in the first frequency domain direction, and the second edge is the edge of the system bandwidth in the second frequency domain direction. The first frequency domain direction is opposite to the second frequency domain direction. For example, the first frequency domain direction is the high-frequency direction, and the second frequency domain direction is the low-frequency direction. Alternatively, the first frequency domain direction is the low-frequency direction, and the second frequency domain direction is the high-frequency direction.

In some embodiments, the grid group includes at least two grid pairs. Between different grid pairs, the grids in one grid pair can be both different from the grids in the other grid pair, alternatively, there can be a same grid between different grid pairs.

In some embodiments, each grid group includes a first grid subgroup and a second grid subgroup, where the first grid subgroup includes M first grids and the second grid subgroup includes M second grids. The M first grids and the M second grids are in one-to-one correspondence, that is, the M first grids and the M second grids form M grid pairs. The first grid is separated from the first edge of the system bandwidth in the high-frequency direction by a second frequency domain element width, and the second grid is separated from the second edge of the system bandwidth in the low-frequency direction by a third frequency domain element width. For example, as shown in FIG. 4, the first grid subgroup includes Grid M11 and Grid M12, and the second grid subgroup includes Grid M21 and M22. Grid M11 and Grid M21 form a grid pair, and Grid M12 and Grid M22 form a grid pair. The grids in the first grid subgroup are separated from the system bandwidth by a second frequency domain element width, and the grids in the second grid subgroup are separated from the system bandwidth by a third frequency domain element width.

In some embodiments, the second frequency domain element width and the third frequency domain element width are defined in a protocol or pre-configured by the network device for the user equipment. The second frequency domain element width can be the same as or different from the third frequency domain element width.

In some embodiments, the first grid can also be separated from the second grid by the first frequency domain element width. The first frequency domain element width can be the same as or different from the second frequency domain element width and the third frequency domain element width.

In some embodiments, the first grid is the grid close to the high-frequency edge of the system bandwidth, and the second grid is the grid close to the low-frequency edge of the system bandwidth. Alternatively, the first grid is the grid close to the low-frequency edge of the system bandwidth, and the second grid is the grid close to the high-frequency edge of the system bandwidth.

In some embodiments, a distance between the grid and the system bandwidth can be a distance between the central frequency point of the grid and the edge of the system bandwidth, or a distance between the edge of the grid and the edge of the system bandwidth.

In some embodiments, a sum of frequency domain element widths occupied by the two SSBs and the first frequency domain element width is greater than or equal to the system bandwidth.

In some embodiments, a sum of frequency domain element widths occupied by the two grids and the first frequency domain element width is greater than or equal to the system bandwidth.

In some embodiments, the first grid is the grid located close to the high-frequency edge of the system bandwidth, and a frequency domain position of the high-frequency edge of the first grid is higher than a frequency domain position of the high-frequency edge of the system bandwidth. The second grid is the grid located close to the low-frequency edge of the system bandwidth, and a frequency domain position of the low-frequency edge of the second grid is lower than a frequency domain position of the low-frequency edge of the system bandwidth. In some embodiments, the second grid is the grid located close the high-frequency edge of the system bandwidth, and a frequency domain position of the high-frequency edge of the second grid is higher than a frequency domain position of the high-frequency edge of the system bandwidth. The first grid is the grid located close to the low-frequency edge of the system bandwidth, and a frequency domain position of the low-frequency edge of the first grid is lower than a frequency domain position of the low-frequency edge of the system bandwidth.

The network device can send the synchronization signal blocks in at least two grids in the same grid group, the grid group may not be divided into subgroups, and the grid pair(s) can be directly provided within the grid group. Alternatively, the grid group may be divided into subgroups, and the grid pair(s) can be provided within the grid subgroup.

In some embodiments, the at least two grids include the first grid and the second grid. The network device sends a first synchronization signal block in the first grid, and sends a second synchronization signal block in the second grid, with both the first synchronization signal block and the second synchronization signal block carrying the same synchronization information.

In some embodiments, a synchronization signal group corresponding to the grid group is defined. The same grid group is used to transmit at least two synchronization signal blocks, each grid in the grid group is used to transmit one synchronization signal block, and the at least two synchronization signal blocks transmitted in the same grid group belong to the same synchronization signal block group. The synchronization signal block group includes at least two synchronization signal blocks, and the at least two synchronization signal blocks carry the same synchronization information.

In some embodiments, the grid mentioned above can be a synchronization grid or a channel grid.

In some embodiments, the system bandwidth includes at least one of the system bandwidth of the LTE system or the system bandwidth of the NR system.

In some embodiments, the system bandwidth is less than 5MHz. In some embodiments, the system bandwidth is 3MHz or 3.6MHz.

In some embodiments, the system bandwidth is less than 20MHz. In some embodiments, the system bandwidth is 5MHz, 8MHz, or 10MHz.

According to the method for sending the synchronization signal block provided by embodiments of the present disclosure, the network device sends the synchronization signal blocks carrying the same synchronization information in at least two grids, so that the user equipment can receive at least two synchronization signal blocks in at least two grids and obtain the complete synchronization information through at least two synchronization signals, which can avoid incomplete information due to insufficient bandwidth and avoid information loss during the transmission.

The technical solutions of the present disclosure include following three points:
1) a design of a synchronization grid; in the design, synchronization grids are mainly in pairwise correspondence, and characterized in that a distance between the synchronization grids in pairwise correspondence is fixed, and distances between the synchronization grid and upper and lower edges of the system bandwidth are fixed;
2) a way of determining the frequency domain position of the SSB; during detection of the SSB, UE determines the frequency domain position of a second SSB after a first SSB is detected;
3) a definition of an SSB group.

With respect to the first point of the technical solutions, in embodiments of the present disclosure, the network device sends the SSB at the frequency domain position in the system bandwidth where at least one synchronization grid is located, that is, the central frequency point of the SSB is aligned with a certain synchronization grid. The UE determines, through a blind detection, the synchronization grid in which the SSB is sent, and further receives and decodes the SSB to complete the initial access. The SSB includes a Primary Synchronization Signal (PSS), a Secondary Synchronization Signal (SSS), and a Physical Broadcast Channel (PBCH), and the signals/channels contained in the SSB occupy up to 20 RBs in the frequency domain. When SSB is punched/punctured, an upper edge and/or a lower edge of the SSB exceed the system bandwidth by no more than 4 RBs. That is, the SSB is punched/punctured on a single edge not exceeding no more than 4 RBs. The way of being punched/punctured includes at least one of the following.
1) The network device maps SSB information into 20 RBs, and does not send any parts that exceed the system bandwidth.
2) The network device only maps SSB information into RBs within the system bandwidth, and does not map or send any parts that exceed the system bandwidth.
3) The network device maps SSB information into 20 RBs, and the UE does not receive the parts that exceed the system bandwidth.

In the embodiments, the UE receives at least n SSBs within a time period and combines the at least n SSBs, where n is an integer greater than or equal to 1. The time period can be at least one of the following:
a time slot or several slots;
one or more radio frames;
half a radio frame.

In some embodiments, the preferred time period can be 20ms, 40ms, 60ms, 80ms, 100ms, 120ms, 160ms, and 320ms.

Based on the above framework, the network device sends the SSB in the synchronization grid predefined in the protocol, and the UE receives in the synchronization grid predefined in the protocol the SSB sent by the network device. The way of defining the synchronization grid includes at least one of the following.

### Way 1

The synchronization grid group is defined in the protocol, each synchronization grid group includes two synchronization grid subgroups, and each synchronization grid subgroup includes at least two synchronization grids. The synchronization grids in the synchronization grid subgroup are in pairwise correspondence, and the synchronization grids in pairwise correspondence are separated from each other by 'e' (the first frequency domain element width) in the frequency domain, where 'e' is at least one fixed value predefined in the protocol, and 'e' is preferably at least one of the following: 4RB, 720kHz, 750kHz, 700kHz, 800kHz.

### Way 2

The synchronization grid group is defined in the protocol, and each synchronization grid group includes at least two synchronization grids. The at least two synchronization grids in the synchronization grid group are in pairwise correspondence, and the synchronization grids in pairwise correspondence are separated from each other by 'e' in the frequency domain, where 'e' is at least one fixed value predefined in the protocol, and 'e' is preferably at least one of the following: 4RB, 720kHz, 750kHz, 700kHz, 800kHz.

### Way 3

The synchronization grid group is defined in the protocol, each synchronization grid group includes a first synchronization grid subgroup and a second synchronization grid subgroup, and each synchronization grid subgroup includes at least one synchronization grid. The synchronization grid(s) in the first synchronization grid subgroup and the synchronization grid(s) in the second synchronization grid subgroup are in one-to-one correspondence. The synchronization grid in the first synchronization grid subgroup is separated from the edge of the system bandwidth in the high-frequency direction by not less than 'a' (the second frequency domain element width), where 'a' is at least one fixed value predefined in the protocol, and 'a' is preferably at least one of the following: 10RB, 1800kHz, 1850kHz. The synchronization grid in synchronization grid subgroup is separated from the edge of the system bandwidth in the low-frequency direction by not less than 'b' (the third frequency domain element width), where 'b' is at least one fixed value predefined in the protocol, and 'b' is preferably at least one of the following: 6RB, 1080kHz, 1100kHz.

### Way 4

The synchronization grid group is defined in the protocol, and each synchronization grid group includes at least two synchronization grids. A first synchronization grid and a second synchronization grid among the at least two synchronization grids are in one-to-one correspondence. The first synchronization grid is separated from the edge of the system bandwidth in the high-frequency direction by not less than 'a', where 'a' is at least one fixed value predefined in the protocol, and 'a' is preferably at least one of the following: 10RB, 1800kHz, 1850kHz. The second synchronization grid is separated from the edge of the system bandwidth in the low-frequency direction by not less than 'b', where 'b' is at least one fixed value predefined in the protocol, and 'b' is preferably at least one of the following: 6RB, 1080kHz, 1100kHz.

With respect to the second point of the technical solutions, in the embodiments of the present disclosure, the network device sends the SSB in at least one synchronization grid or channel grid in the system bandwidth, that is, the central frequency point of the SSB is aligned with a certain synchronization grid or channel grid. The UE determines, through a blind detection, the synchronization grid in which the SSB is sent, and further receives and decodes the SSB to complete the initial access. The SSB includes the PSS, the SSS, and the PBCH, and the signals/channels contained in the SSB occupy up to 20 RBs in the frequency domain. When SSB is punched/punctured, an upper edge and/or a lower edge of the SSB exceed the system bandwidth by no more than 4 RBs. That is, the SSB is punched/punctured on a single edge not exceeding no more than 4 RBs.

In the embodiments, the UE receives at least n SSBs within a time period and combines the at least n SSBs, where n is an integer not less than 1 and can be divided by 2. The time period can be at least one of the following: a time slot or several slots, one or more radio frames, or half a radio frame. The preferred time period can be 20ms, 40ms, 60ms, 80ms, 100ms, 120ms, 160ms, and 320ms.

Based on the above framework, the network device sends the SSBs in the synchronization grid or the channel grid predefined in the protocol, and the UE receives in the synchronization grid or the channel grid predefined in the protocol the SSBs sent by network device. The way for the UE to determine the position at which the network device sends the SSB sent includes at least one of the following.

### Way 1

The UE blind detects the SSB in the synchronization grid predefined in the protocol, and determines a frequency domain position where a first SSB is located, where the blind detection direction is from the low-frequency to the high-frequency. The UE then detects a second SSB, the second SSB being separated from the frequency domain position where the first SSB is located by an offset 'e' towards the high-frequency direction, where 'e' is at least one fixed value predefined in the protocol, and 'e' is preferably at least one of the following: 4RB, 720kHz, 750kHz, 700kHz, 800kHz.

### Way 2

The UE blind detects the SSB in the synchronization grid predefined in the protocol, and determines a frequency domain position where a first SSB is located, where the blind detection direction is from the high-frequency to the low-frequency. The UE then detects a second SSB, the second SSB being separated from the frequency domain position where the first SSB is located by an offset 'e' towards the low-frequency direction, where 'e' is at least one fixed value predefined in the protocol, and 'e' is preferably at least one of the following: 4RB, 720kHz, 750kHz, 700kHz, 800kHz.

### Way 3

The UE blind detects the SSB in the channel grid predefined in the protocol, and determines a frequency domain position where a first SSB is located, where the blind detection direction is from the low-frequency to the high-frequency. The UE then detects a second SSB, the second SSB being separated from the frequency domain position where the first SSB is located by an offset 'e' towards the high-frequency direction, where 'e' is at least one fixed value predefined in the protocol, and 'e' is preferably at least one of the following: 4RB, 720kHz, 750kHz, 700kHz, 800kHz.

### Way 4

The UE blind detects the SSB in the channel grid predefined in the protocol, and determines a frequency domain position where a first SSB is located, where the blind detection direction is from the high-frequency to the low-frequency. The UE then detects a second SSB, the second SSB being separated from the frequency domain position where the first SSB is located by an offset 'e' towards the low-frequency direction, where 'e' is at least one fixed value predefined in the protocol, and 'e' is preferably at least one of the following: 4RB, 720kHz, 750kHz, 700kHz, 800kHz.

With respect to the third point of the technical solutions, in the embodiments of the present disclosure, the network device sends the SSB in at least one synchronization grid or channel grid in the system bandwidth, that is, the central frequency point of the SSB is aligned with a certain synchronization grid or channel grid. The UE determines, through a blind detection, the synchronization grid in which the SSB is sent, and further receives and decodes the SSB to complete the initial access. The UE receives a group of SSBs within a time period. The time period can be at least one of the following: a time slot or several slots, one or more radio frames, or half a radio frame. The preferred time period can be 20ms, 40ms, 60ms, 80ms, 100ms, 120ms, 160ms, and 320ms.

Based on the above framework, the features of the SSB group include:
at least n SSBs are included, where n is an integer not less than 1 and can be divided by 2;
the information carried by the SSBs within the group is the same;
the SSBs within the group are sent in at least two synchronization grids or channel grids.

As shown in FIG. 6, in some embodiments, two SSB0s in the SSB group are transmitted in the synchronization grid group during the first time period.

Based on the definitions of the synchronization grid group and the SSB group mentioned above, multiple SSBs can be transmitted between the network device and the user equipment through multiple synchronization grids. The multiple SSBs carrying the same synchronization information can be combined, so that the complete synchronization information can be parsed, and the information loss in the SSBs caused by punching and other issues can be avoided.

FIG. 7 shows a block diagram of an apparatus for receiving a synchronization signal block according to one or more embodiments of the present disclosure. The apparatus can be implemented as a part or the whole of the UE through software, hardware, or a combination of the both. The apparatus includes a receiving module 410.

The receiving module 410 is configured to receive a synchronization signal block in at least two grids.

In some embodiments, the at least two grids belong to a same grid group, the grid group includes at least one grid pair, and the grid pair includes a first grid and a second grid.

In some embodiments, the first grid is separated from the second grid by a first frequency domain element width.

In some embodiments, the first grid is separated from a first edge of a system bandwidth of a communication system by a second frequency domain element width, and the second grid is separated from a second edge of the system bandwidth by a third frequency domain element width.

In some embodiments, the first edge is an edge of the system bandwidth in a first frequency domain direction, the second edge is an edge of the system bandwidth in a second frequency domain direction, and the first frequency domain direction is opposite to the second frequency domain direction.

In some embodiments, the receiving module 410 is configured to: receive a first synchronization signal block in the first grid; receive a second synchronization signal block in the second grid; and obtain synchronization information based on the first synchronization signal block and the second synchronization signal block.

In some embodiments, the first synchronization signal block and the second synchronization signal block carry same synchronization information.

In some embodiments, the apparatus further includes a detection module 420.

The detection module 420 is configured to determine a second frequency domain position, the second frequency domain position being separated from a first frequency domain position of the first synchronization signal block by the first frequency domain element width that is offset towards a first frequency domain direction; and detect the second synchronization signal block at the second frequency domain position in a direction from a low-frequency to a high-frequency or a direction from the high-frequency to the low-frequency.

In some embodiments, the same grid group is configured to transmit at least two synchronization signal blocks, each grid in the grid group is configured to transmit each synchronization signal block, the at least two synchronization signal blocks transmitted in the same grid group belong to a same synchronization signal block group, and the synchronization signal blocks in the same synchronization signal block group carry same synchronization information.

In some embodiments, the grid is a synchronization grid or a channel grid.

FIG. 8 shows a block diagram of an apparatus for sending a synchronization signal block according to one or more embodiments of the present disclosure. The apparatus can be implemented as a part or the whole of the UE through software, hardware, or a combination of the both. The apparatus includes a sending module 510.

The sending module 510 is configured to send a synchronization signal block in at least two grids.

In some embodiments, the at least two grids belong to a same grid group, the grid group includes at least one grid pair, and the grid pair includes a first grid and a second grid.

In some embodiments, the first grid is separated from the second grid by a first frequency domain element width.

In some embodiments, the first grid is separated from a first edge of a system bandwidth of a communication system by a second frequency domain element width, and the second grid is separated from a second edge of the system bandwidth by a third frequency domain element width.

In some embodiments, the first edge is an edge of the system bandwidth in a first frequency domain direction, the second edge is an edge of the system bandwidth in a second frequency domain direction, and the first frequency domain direction is opposite to the second frequency domain direction.

In some embodiments, the sending module 510 is configured to: send a first synchronization signal block in the first grid; and send a second synchronization signal block in the second grid.

In some embodiments, the first synchronization signal block and the second synchronization signal block carry same synchronization information.

In some embodiments, the same grid group is configured to transmit at least two synchronization signal blocks, each grid in the grid group is configured to transmit each synchronization signal block, the at least two synchronization signal blocks transmitted in the same grid group belong to a same synchronization signal block group, and the synchronization signal blocks in the same synchronization signal block group carry same synchronization information.

In some embodiments, the grid is a synchronization grid or a channel grid.

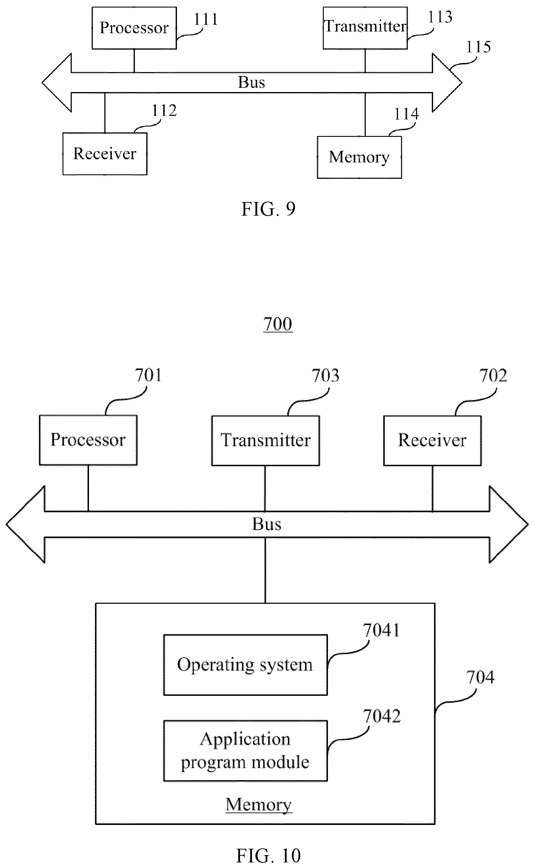

FIG. 9 shows a schematic diagram of a structure of UE provided in one or more embodiments of the present disclosure. The UE includes a processor 111, a receiver 112, a transmitter 113, a memory 114, and a bus 115.

The processor 111 includes one or more processing cores, which execute various functional applications and information processing by running software programs and modules.

The receiver 112 and the transmitter 113 can be embodied as a communication component, which can be a communication chip.

The memory 114 is connected to the processor 111 through the bus 115.

The memory 114 can be configured to store at least one program code, and the processor 111 is configured to execute the at least one program code to implement the various steps in the above method embodiments.

In addition, the memory 114 can be embodied by any type of volatile or non-volatile storage device, or a combination thereof. Volatile or non-volatile storage devices include but are not limited to: magnetic disks or optical discs, electrically erasable programmable read-only memory (EEPROM), erasable programmable read-only memory (EPROM), static random-access memory (SRAM), read-only memory (ROM), magnetic memory, flash memory, and programmable read-only memory (PROM).

In some embodiments, a non-transitory computer-readable storage medium including instructions is also provided, such as a memory including instructions, which can be executed by the processor of UE to implement the method for receiving the synchronization signal block described above. For example, the non-transitory computer-readable storage medium can be ROM, random-access memory (RAM), compact disc read-only memory (CD-ROM), magnetic tape, floppy disk, and optical data storage device, etc.

In some embodiments, a non-transitory computer-readable storage medium is provided, and when the instructions in the non-transitory computer-readable storage medium are executed by a processor of UE, the user equipment (UE) is enabled to perform the method for receiving the synchronization signal block described above.

FIG. 13 is a block diagram of an access network device 700 according to one or more embodiments of the present disclosure. The access network device 700 can be a base station.

The access network device 700 can include a processor 701, a receiver 702, a transmitter 703, and a memory 704. The receiver 702, the transmitter 703, and the memory 704 are respectively connected to the processor 701 through a bus.

In some embodiments, the processor 701 includes one or more processing cores, and the processor 1301 implements the method for sending the synchronization signal block provided in embodiments of the present disclosure by running software programs and modules. The memory 704 can store software programs and modules. In some embodiments, the memory 704 can store an operating system 7041 and at least one application program module 7042 required for a specific function. The receiver 702 is used to receive communication data sent by other devices, and the transmitter 703 is used to send communication data to other devices.

Embodiments of the present disclosure also provide a computer-readable storage medium, which stores at least one instruction, at least one program, a code set, or an instruction set. The at least one instruction, the at least one program, the code set, or the instruction set is loaded and executed by a processor to cause the method for receiving the synchronization signal block provided in the above method embodiments to be implemented, or to cause the method for sending the synchronization signal block provided in the above method embodiments to be implemented.

Embodiments of the present disclosure also provide a computer program product including computer instructions stored in a computer-readable storage medium. A processor of a computer device reads and executes the computer instructions from the computer-readable storage medium, to cause the computer device to implement the method for receiving the synchronization signal block provided in various method embodiments described above, or to cause the computer device to implement the method for sending the synchronization signal block provided in various method embodiments described above.

It should be understood that the term "multiple" mentioned in the present disclosure refers to two or more. The term "and/or" describes the association relationship between associated objects, indicating that there can be three relationships. For example, A and/or B, which can represent A exists alone, A and B exist simultaneously, and B exists alone. The character "/" generally indicates that the associated objects before and after are in an "or" relationship.

After considering the specification and practicing the embodiments disclosed herein, those skilled in the art will easily come up with other embodiments of the present disclosure. The present disclosure is intended to cover any variations, uses, or adaptive changes of the present disclosure that follow the general principles of the present disclosure and include common knowledge or customary technical means in the art that are not disclosed herein. The specification and embodiments are considered as exemplary only, and the true scope and spirit of the present disclosure are indicated by the appended claims.

It should be understood that the present disclosure is not limited to the precise structure described above and shown in the drawings, and various modifications and changes can be made without departing from the scope thereof. The scope of the present disclosure is limited only by the appended claims.

## Claims

1. A method for receiving a synchronization signal block, performed by a user equipment, and the method comprising:
receiving a synchronization signal block in at least two grids.

2. The method according to claim 1, wherein the at least two grids belong to a same grid group, the grid group comprises at least one grid pair, and the grid pair comprises a first grid and a second grid.

3. The method according to claim 2, wherein the first grid is separated from the second grid by a first frequency domain element width.

4. The method according to claim 2, wherein the first grid is separated from a first edge of a system bandwidth of a communication system by a second frequency domain element width, and the second grid is separated from a second edge of the system bandwidth by a third frequency domain element width; and
wherein the first edge is an edge of the system bandwidth in a first frequency domain direction, the second edge is an edge of the system bandwidth in a second frequency domain direction, and the first frequency domain direction is opposite to the second frequency domain direction.

5. The method according to claim 3 or 4, wherein receiving the synchronization signal block in the at least two grids, comprises:
receiving a first synchronization signal block in the first grid;
receiving a second synchronization signal block in the second grid; and
obtaining synchronization information based on the first synchronization signal block and the second synchronization signal block;
wherein the first synchronization signal block and the second synchronization signal block carry same synchronization information.

6. The method according to claim 5, further comprising:
determining a second frequency domain position, wherein the second frequency domain position is separated from a first frequency domain position of the first synchronization signal block by the first frequency domain element width that is offset towards a first frequency domain direction; and
detecting the second synchronization signal block at the second frequency domain position in a direction from a low-frequency to a high-frequency or a direction from the high-frequency to the low-frequency.

7. The method according to any of claims 2 to 6, wherein the same grid group is configured to transmit at least two synchronization signal blocks, each grid in the grid group is configured to transmit each synchronization signal block, the at least two synchronization signal blocks transmitted in the same grid group belong to a same synchronization signal block group, and the synchronization signal blocks in the same synchronization signal block group carry same synchronization information.

8. The method according to any of claims 1 to 6, wherein the grids are synchronization grids or channel grids.

9. A method for sending a synchronization signal block, performed by a network device, and the method comprising:
sending a synchronization signal block in at least two grids.

10. The method according to claim 9, wherein the at least two grids belong to a same grid group, the grid group comprises at least one grid pair, and the grid pair comprises a first grid and a second grid.

11. The method according to claim 10, wherein the first grid is separated from the second grid by a first frequency domain element width.

12. The method according to claim 10, wherein the first grid is separated from a first edge of a system bandwidth of a communication system by a second frequency domain element width, and the second grid is separated from a second edge of the system bandwidth by a third frequency domain element width; and
wherein the first edge is an edge of the system bandwidth in a first frequency domain direction, the second edge is an edge of the system bandwidth in a second frequency domain direction, and the first frequency domain direction is opposite to the second frequency domain direction.

13. The method according to claim 11 or 12, wherein sending the synchronization signal block in the at least two grids, comprises:
sending a first synchronization signal block in the first grid; and
sending a second synchronization signal block in the second grid;
wherein the first synchronization signal block and the second synchronization signal block carry same synchronization information.

14. The method according to any of claims 10 to 13, wherein the same grid group is configured to transmit at least two synchronization signal blocks, each grid in the grid group is configured to transmit each synchronization signal block, the at least two synchronization signal blocks transmitted in the same grid group belong to a same synchronization signal block group, and the synchronization signal blocks in the same synchronization signal block group carry same synchronization information.

15. The method according to any of claims 9 to 13, wherein the grids are synchronization grids or channel grids.

16. An apparatus for receiving a synchronization signal block, comprising:
a receiving module configured to receive a synchronization signal block in at least two grids.

17. An apparatus for sending a synchronization signal block, comprising:
a sending module configured to send a synchronization signal block in at least two grids.

18. A user equipment, comprising:
a processor; and
a transceiver connected to the processor;
wherein the processor is configured to load and execute executable instructions to perform the method for receiving the synchronization signal block according to any of claims 1 to 8.

19. A network device, comprising:
a processor; and
a transceiver connected to the processor;
wherein the processor is configured to load and execute executable instructions to perform the method for sending the synchronization signal block according to any of claims 9 to 15.

20. A computer-readable storage medium having at least one instruction, at least one program, a code set, or an instruction set stored thereon, which when loaded and executed by a processor, causes the method for receiving the synchronization signal block according to any of claims 1 to 8, or the method for sending the synchronization signal block according to any of claims 9 to 15, to be performed.

21. A computer program product comprising computer instructions stored in a computer-readable storage medium, wherein a processor of a computer device reads the computer instructions from the computer-readable storage medium, and executes the computer instructions, to cause the computer device to perform the method for receiving the synchronization signal block according to any of claims 1 to 8, or the method for sending the synchronization signal block according to any of claims 9 to 15.

22. A communication system, comprising a user equipment and a network device, wherein the user equipment is configured to perform the method for receiving the synchronization signal block according to any of claims 1 to 8, and the network device is configured to perform the method for sending the synchronization signal block according to any of claims 9 to 15.
